# EUROPEAN PATENT APPLICATION

(11) **EP 2 362 338 A1**
(43) Date of publication of application: **31.08.2011**
(21) Application number: 10159933.0
(22) Date of filing: 14.04.2010
(51) Int. Cl.: G06Q 30/00

(54) **System and method for advertisement delivery based on indicated status**

(30) Priority: 26.02.2010 US 713300
(71) Applicant: RESEARCH IN MOTION LIMITED, Waterloo, Ontario N2L 3W8 (CA)
(72) Inventor: Sasaki, Curtis Jyun, Redwood City, CA 94065-1183 (US); Bells, Matthew, Waterloo Ontario N2L 5Z5 (CA); Tziortzis, Alek, Rolling Meadows, IL 60008 (US)
(74) Representative: Patel, Binesh

(57) **Abstract**

A method and system for delivery and display of an advertisement message on a communication device, based on an indicated status at the communication device. The computer implemented method comprises receiving, at the communication device, an advertisement message, determining whether a status indicator mode is active; upon determining that the status indicator mode is active, determining a reconfiguration rule for applying to the advertisement message, reconfiguring the advertisement message, and presenting the reconfigured advertisement message at the communication device.

## Description

### FIELD

The present disclosure relates generally to a system and method for delivery and display of an advertisement or a sales promotion offer on a communication device, and more specifically to a system and method for delivering and displaying the advertisement or sales promotion while the user of the communication device is otherwise engaged.

### BACKGROUND

With the proliferation of communication devices, commercial advertisers are constantly looking for new ways and mediums to communicate their messages to a large number of users. Ensuring that an advertisement delivered to a mobile communication device will be fully reviewed and considered by the user becomes a challenge, because once users become accustomed to a given communication venue, they may tend to ignore or skip the messages. Especially given the relatively widespread usage of handheld wireless devices, advertisers would be desirous of providing advertisements in a manner that enhances the chances of the advertisement actually being reviewed and considered.

Accordingly, there is a need for providing messages in venues such as communication devices in such a way that users will be motivated to listen to or review the messages, including viewing of images, video and text. If provided with regard to the degree of intrusiveness of the messages, users may be less likely to skip or ignore the messages. Especially if a user is permitted to specify an acceptable degree of intrusiveness, such as by indicating a status as to his/ her preferred conditions for accepting the advertisement message, for example, style of delivery and timing of the advertisement message, a user will be less likely to skip or ignore the messages.

### BRIEF DESCRIPTION OF THE DRAWINGS

Embodiments are illustrated by way of example only and not limitation, with reference to the following drawings in which like reference numerals indicate corresponding or similar elements, and in which:

Figure 1 is a block diagram illustrating a wireless communication system and a communication device which communicates and receives advertising messages within this system, in accordance with one embodiment;

Figure 2 is a block diagram illustrating an exemplary electronic architecture of the communication device of Figure 1;

Figure 3 is an exemplary diagram of the communication device of Figure 1 for delivering and displaying messages;

Figure 4 illustrates an alternate embodiment of the communication device of Figure 1 for delivering and displaying messages;

Figure 5 illustrates an exemplary process flow among components of the system of Figure 1 for delivering and displaying messages to a communication device; and

Figure 6 depicts another variation of the process flow among components of the system of Figure 1 for delivering and displaying advertisement messages.

### SUMMARY

There is provided a computer implemented method in a processor of communication device for delivery and display of an advertisement message. The method comprises receiving, at the communication device, an advertisement message; determining whether a status indicator mode is active; upon determining that the status indicator mode is active, determining a reconfiguration rule for applying to the advertisement message; reconfiguring the advertisement message according to the determined reconfiguration rule; and presenting the reconfigured advertisement message at the communication device.

In a further embodiment, the determined reconfiguration rule comprises reconfiguration to a silent mode screen display including graphical effects.

In yet another exemplary variation, the determined reconfiguration rule comprises reconfiguration to an audible advertisement message.

In another aspect, reconfiguring the advertisement message comprises accessing a calendar application of the communication device; identifying a next available time slot of the calendar application; and delaying presentation of the advertisement message at the communication device until a time during the next available time slot.

In another embodiment, the next available time slot comprises a next available time slot for displaying advertisements.

In yet another embodiment, the advertisement message is received from a merchant source, the merchant source being listed in an application of the communication device.

In a further exemplary variation, the advertisement message is presented at the communication device only if a predefined condition associated with the merchant source is satisfied.

In another embodiment, the predefined condition associated with the merchant source comprises opening hours of a business entity of the merchant source.

There is also provided a computer program product storing instructions and data to configure a processor to perform the above described methods.

There is further provided a communication device for displaying an advertisement message. The communication device comprises a processor and a memory coupled thereto, the memory storing instructions and data configuring the processor to perform the above described methods.

In further embodiment, the communication device comprises a wireless handheld communication device.

There is further provided a communication device for displaying an advertisement message based on an indicated status mode at the communication device. The communication device comprises a processor; a memory coupled to the processor, the memory comprising instructions which, when executed in the processor, provide a status indicator monitor module to indicate an active mode; an advertisement filter module to determine a reconfiguration rule to apply to the advertisement message when the active mode is indicated; and an advertisement reconfiguration module to reconfigure the advertisement, according to the determined reconfiguration rule, for presentation at a display of the communication device, the display being coupled to the processor and to the memory.

In one exemplary variation, the reconfiguration module reconfigures the advertisement message for presentation in a silent mode screen display including graphical effects.

In yet another exemplary variation, the reconfiguration module reconfigures the advertisement message for presentation as an audible advertisement message.

In yet another embodiment, the communication device further comprises a calendar application, the calendar application including a next available time slot wherein the presentation of the advertisement message at the communication device is delayed until a time during the next available time slot.

In yet another exemplary variation, the next available time slot comprises a next available time slot for displaying advertisements.

In another embodiment, the communication device further comprises an address book application having an address book list, the address book list including a merchant source for the advertisement message.

In yet another embodiment, the advertisement message is presented at the communication device only if a predefined condition associated with the merchant source is satisfied.

There is further provided a method implemented in a processor of a server computer for delivery and display of an advertisement message at a communication device, the server computer communicatively coupled to the communication device over a communication network. The method comprises determining whether a status indicator mode of the communication device is active, when the advertisement message is received at the communication device; upon determining that the status indicator mode is active, receiving the advertising message at the server computer, determining a reconfiguration rule for applying to the advertisement message; reconfiguring the advertisement message according to the determined reconfiguration rule; and forwarding the reconfigured advertisement message for presentation at the communication device.

In a further exemplary embodiment, the step of forwarding the advertisement message to the communication device further comprises accessing a calendar application of the communication device; identifying a next available time slot of the calendar application; and delaying presentation of the advertisement message at the communication device until a time during the next available time slot.

### DETAILED DESCRIPTION

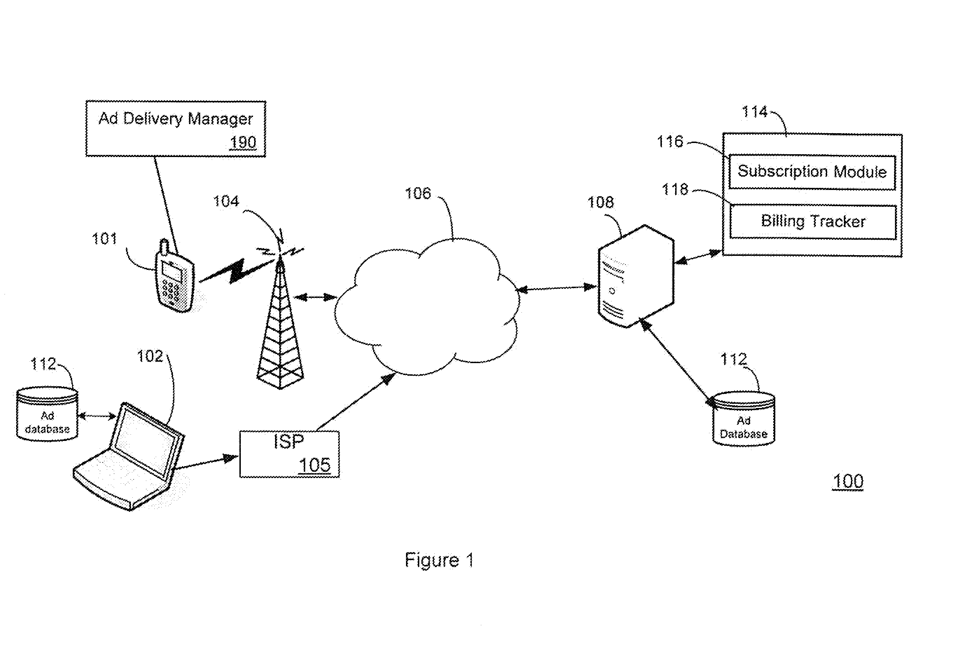

Referring to Figure 1, a communication system is illustrated generally by numeral 100. The communication system 100 may comprise a plurality of communication devices 101, 102, a base station or antenna 104, a communication network 106, a carrier system computer server 108, a billing system 114, and an advertisement message delivery manager 190 having access to message database 112.

In yet another variation on the embodiment of the communication system depicted in Figure 1, the server may comprise any network server capable of supplying advertisements (or advertising content) to the handheld device 101. For example, it could be an advertising server in communication with an advertising network. In this embodiment, it is contemplated that the network supplies the advertisements to the advertising server, which in turn communicates the advertisements to handheld device 101. Handheld device 101 may optionally be configured with an advertising engine which is configured to receive advertisements from the advertising server. It is further contemplated that ad delivery manager 190 may be a component of the advertisement engine.

It will be understood by a person skilled in the art that the communication system 100 of Figure 1 has been illustrated with a number of pertinent components for exemplary purposes only. Accordingly, a plurality of communication devices 101, 102, base stations 104, communication networks 106, carrier system computer servers 108, billing systems 114, message delivery manager 190 and related message databases 112 may be envisaged as needed.

The communication devices 101, 102 are in communication with computer server 108 via the communication network 106, the base station 104, and internet service provider 105. Accordingly, the communication network 106 may include several components such as a wireless network, a relay, a corporate server 110 and/or a mobile data server (MDS) for relaying data between the base station 104 and the carrier system 108. The communication network 106 may also be configured to support data and voice communications under the Voice over Internet Protocol (VoIP) scheme.

Communication system 100 is configured to deliver and display one or more advertisement messages to communication devices 101, 102. Optionally, the communication system 100 may be configured to track usage of the advertisement messages and to provide financial compensation to a user of the communication devices 101, 102 via the billing system 114 for allowing the messages to be outputted on the communication device 101, 102. For example, the financial compensation may be provided proportionate to the cumulative time of playing the advertisement messages over a given billing cycle. The messages may be accessed by communication device 101 either directly via the message delivery manager system 190 or indirectly via the carrier system server 108 to the communication devices 101, 102.

Wireless communication services are typically provided on a service contract basis where the communication device user enters a service contract with a wireless carrier to have wireless service provided to the communication device 101. Accordingly, the carrier system 108 may be configured to store information such as the communication device 101 user(s) name and billing information, wireless service plan, equipment type, and any other pertinent information to facilitate wireless communication for the communication device 101. The carrier system 108 is a further coupled for communication with carrier infrastructure including a billing system 114. The billing system 114 comprises a subscription module 116, and a billing tracker 118. Subscription module 116 stores information related to communication services which the communication device is enrolled into. Billing tracker 118 may be configured to track and store billing information for the communication device 101 based on the services plan and usage of various advertisement message services available to the communication device 101.

Referring again to Figure 1, the carrier system 108 is coupled to the message delivery manager 190 having access to an advertisement message database 112. The advertisement message database 112 may store a plurality of messages thereon for access by the message delivery manager 190. The message delivery manager 190 is configured to deliver messages for presentation at communication device 101, based on an indicated status of that device.

It will be appreciated by a person of ordinary skill in the art that the communication system 100 described herein is exemplary and that changes may be made to one or more components to accommodate different network configurations without affecting the scope of the disclosure herein. Further, although the present description may specifically recite a communication device 101, it will be appreciated that other types of devices, including both wired and wireless devices, may be employed.

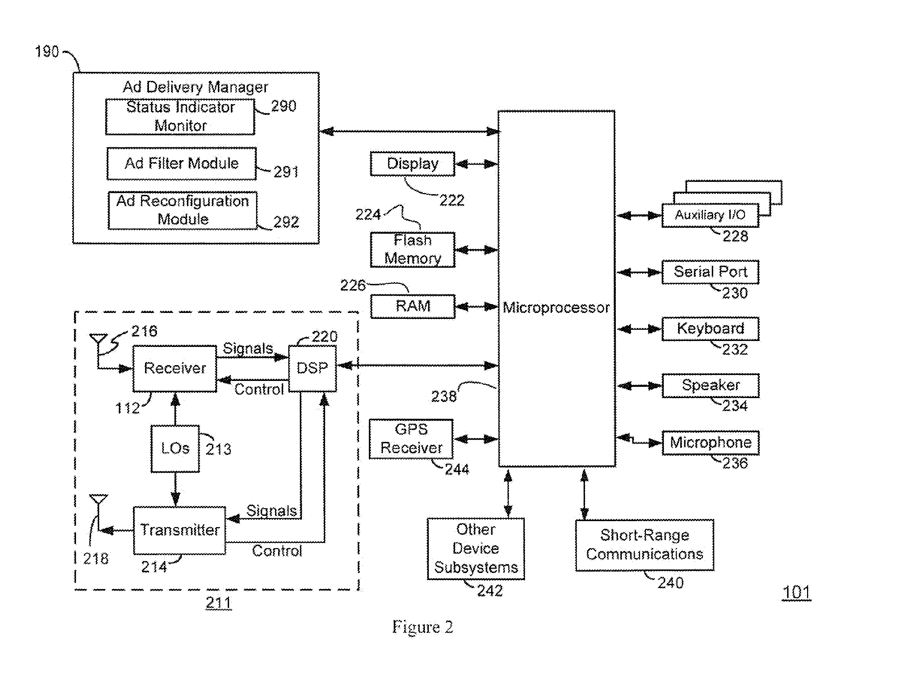

Referring to Figure 2, components of the communication device 101 are illustrated in greater detail. The communication device 101 may be a two-way communication device having both voice and data communication capabilities, including the capability to communicate with other computer systems. Depending on the functionality provided by the communication device 101, it may be referred to as a data messaging device, a two-way pager, a cellular telephone with data messaging capabilities, a wireless Internet appliance, or a data communication device.

The communication device 101 includes a wireless communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which communication device 101 is intended to operate.

The communication device 101 includes a microprocessor 238 which controls general operation of the communication device 101. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234 for presentation of audible output, a microphone 236, a short-range communications subsystem 240 such as Bluetooth™ for example, and any other device subsystems or peripheral devices generally designated at 242. The communication device 101 may also include a positioning device 244, such as a GPS receiver for example, for receiving positioning information

Operating system software used by the microprocessor 238 may be stored in a persistent store of memory such as the flash memory 224, which may alternatively be a read-only memory (ROM) or similar storage element (not shown). Those skilled in the art will appreciate that the operating system, specific device applications, or parts thereof, may be temporarily loaded into a volatile store of memory such as RAM 226.

The microprocessor 238, in addition to its operating system functions, typically enables execution of software applications on the communication device 101. A predetermined set of applications, which control basic device operations, is installed on the communication device 101 during its manufacture. These basic operations typically include data and voice communication applications, such as calendar and address book applications, for example. Additionally, applications may also be loaded onto the communication device 101 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the communication device 101 and may provide enhanced on-device features, communication-related features, or both.

The display screen 222 is used to visually present an application's graphical user interface (GUI) to the user. The user can manipulate application data by modifying information on the GUI using an input device such as the keyboard 232 for example. Depending on the type of communication device 101, the user may be provided with other types of input devices, such as, for example, a scroll wheel, trackball, optical sensor-based input device including a light pen, a camera or a touch sensitive display screen.

Referring again to Figure 2, the communication device 101 further includes message delivery manager 190. As described earlier, the advertising message delivery manager 190 may be configured to receive messages originating from the message database 112. In an alternate embodiment described above, this function could be performed by the advertisement engine resident on handheld device 101. The message delivery manager 190 may comprise status monitor indicator module 290, advertisement filter module 291 and advertisement reconfiguration module 292.

Status monitor indicator module 290 may comprise any combination of software, firmware and hardware to monitor a mode setting by a user of communication device 101. For example, an active mode of status indicator module 290 may be selected or activated by a user to indicate a preference for having advertisement messages to be filtered prior to their presentation to the user at communication device 101. For instance, where a user expects to be occupied, whether in a meeting or driving in busy traffic in a long commute home, the user may select the active mode to exercise full control over the timing of when the ad is presented, and also the style of presentation of the ad.

Advertisement filter module 291 may comprise any combination of software, firmware and hardware to determine an appropriate rule for reconfiguring the ad. For instance, if the user expects to be driving in busy traffic in a long commute home, he/ she may establish a rule that during commute times, ads presented should be audibly presented, such as via a musical "jingle" or melody that might be associated with the product or service being advertised. It is contemplated that once a user establishes a rule, application of that rule may also be automated by the communication device. It is further contemplated that if the advertisement message is received in a text form, one rule might be that it be presented audibly, including via ring tones or speech via the speaker 234 of communication device 101, or it may be presented graphically such as via video.

Another rule might result in an ad being presented via a silent mode, but with various graphical effects at the display screen 222 of the communication device 101. Or further still, the ad being presented in a specific location, such as a specific scroll bar location on display screen 222. Such a rule might be of value to a user where audible presentation of the ad might be disruptive, for example while in a meeting, but yet silent presentation of the ad would be acceptable to the user.

It is contemplated that a calendar application and address book applications of communication device 100 would be data-accessible to status monitor indicator module 290, advertisement filter module 291 and advertisement reconfiguration module 292 via memory 224, 226 and processor 238. Yet another rule might be specified that when a user is busy, as identified by an event occupying a time duration in the calendar application, the presentation of the ad would be delayed until the next available time slot in the user's calendar becomes current, the available time slot being a free time slot where no event or activity occupies any time duration. In still yet another variation, the user might even specify that an ad may only be permitted to be presented during a specially designated time slot, such as between 9pm and 10pm in the evenings, for example.

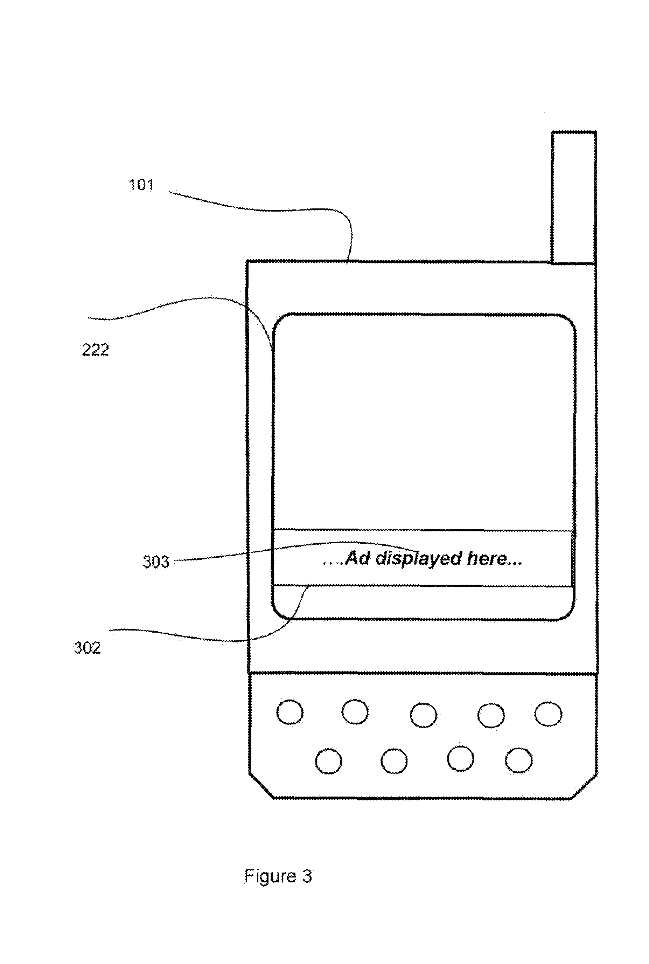

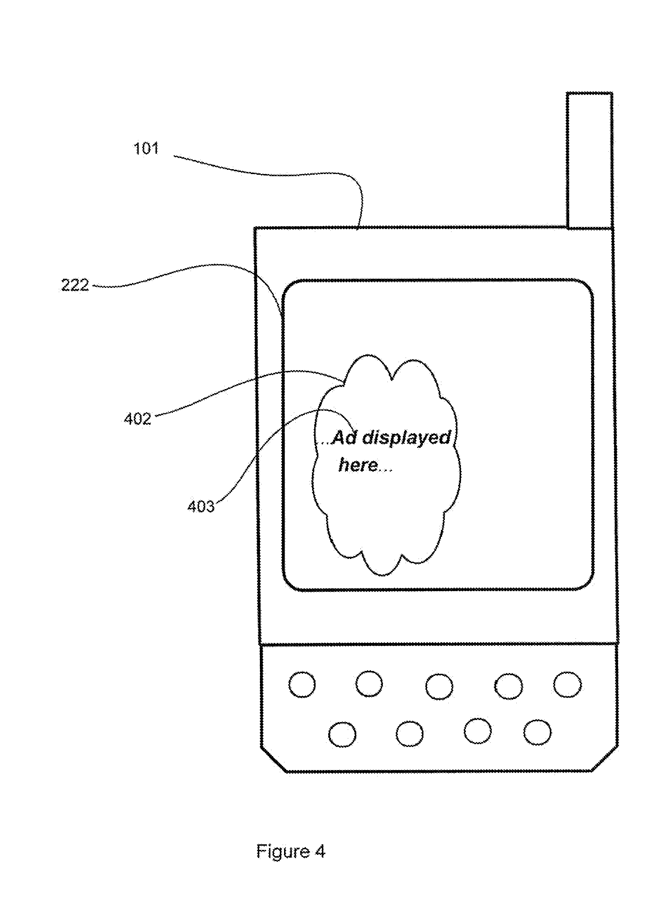

Advertisement reconfiguration module 292 may comprise any combination of software, firmware and hardware to reconfigure the ad for presentation to the user at communication device 101. For instance, the rule to be applied is determined to be silent presentation of the ad, then advertisement reconfiguration module 292 would employ display screen 222 and processor 238 to present the ad appropriately, for example as depicted in Figures 3 and 4.

Figure 3 shows the ad message 303 being displayed in a specifically located scroll bar 302 of display screen 222 at communication device 101. It is contemplated that a user may simultaneously be perusing the remainder of display screen 222 for another purpose, such as a work-related activity.

Figure 4, shows another variation, where the ad 403 is displayed via a more fanciful depiction, which might employ us of special text and background colors, fonts, in creating fanciful graphics 402 at display screen 222 of communication device 101.

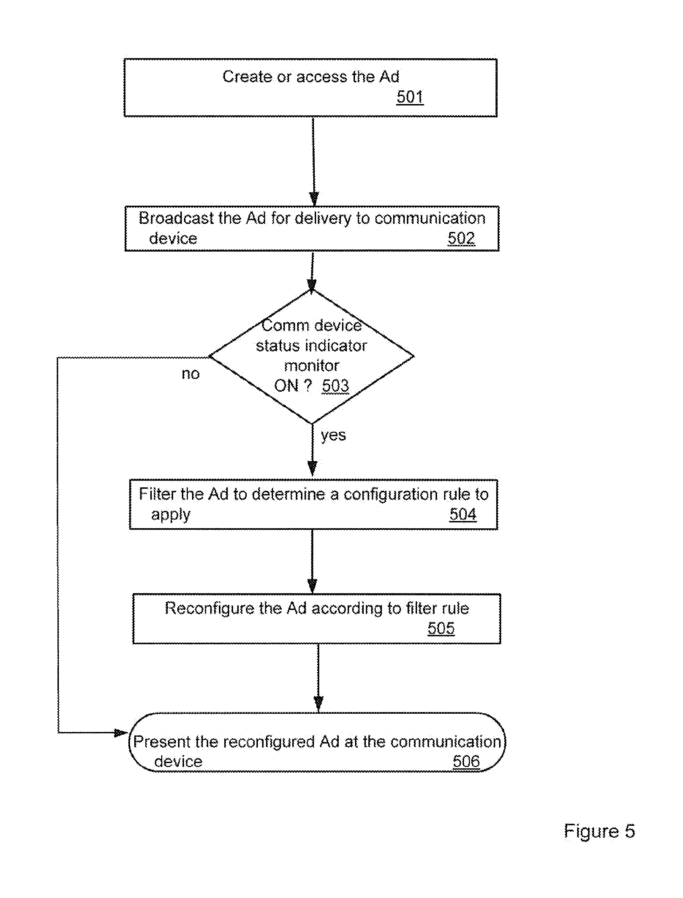

Figure 5 illustrates an exemplary process flow among components of the system of Figure 1 for delivering and displaying messages to communication device 101, based on an indicated status mode. At step 501, ad is created at, and accessed, from ad database 112 by advertiser, such as a merchant, for broadcasting over network 106 to a recipient or targeted communication devices 101, 102. It is contemplated that optionally, the ad network may be based on a subscription module 116, and furthermore, one in which one or more of the recipient or advertiser parties receive compensation for the ads presented, as tracked via billing tracker 118. At step 502, the ad may be broadcast via network 106 to ad delivery manager 190 of communication device 101. At step 503, status indicator monitor 290 indicates whether the user has selected an active mode. If no active mode is selected, the ad is presented as received at communication device 101. If the active mode applies, at step 504, ad filter module 291 determines an appropriate rule to apply to reconfigure the ad, from the set of rules established. At step 505, ad reconfiguration module 292 reconfigures the ad, so that it is presented in a style consistent with the applicable rule, as in the exemplary instances described above. At step 506, the ad is presented to the user at communication device 101.

It is also contemplated that any one or several of the steps depicted in Figure 5 may be alternately implemented via a server computer, such as carrier systems server computer 108, communicatively coupled to communication device 101. For instance, server computer 106 may be tasked with the steps of determining whether a status indicator mode of the communication device is active when the advertisement message is received at the communication device. Then upon determining that the status indicator mode is active, receiving the advertising message at the server computer, determining a reconfiguration rule for applying to the advertisement message, reconfiguring the advertisement message according to the determined reconfiguration rule, and then forwarding the reconfigured advertisement message for presentation at the communication device 101.

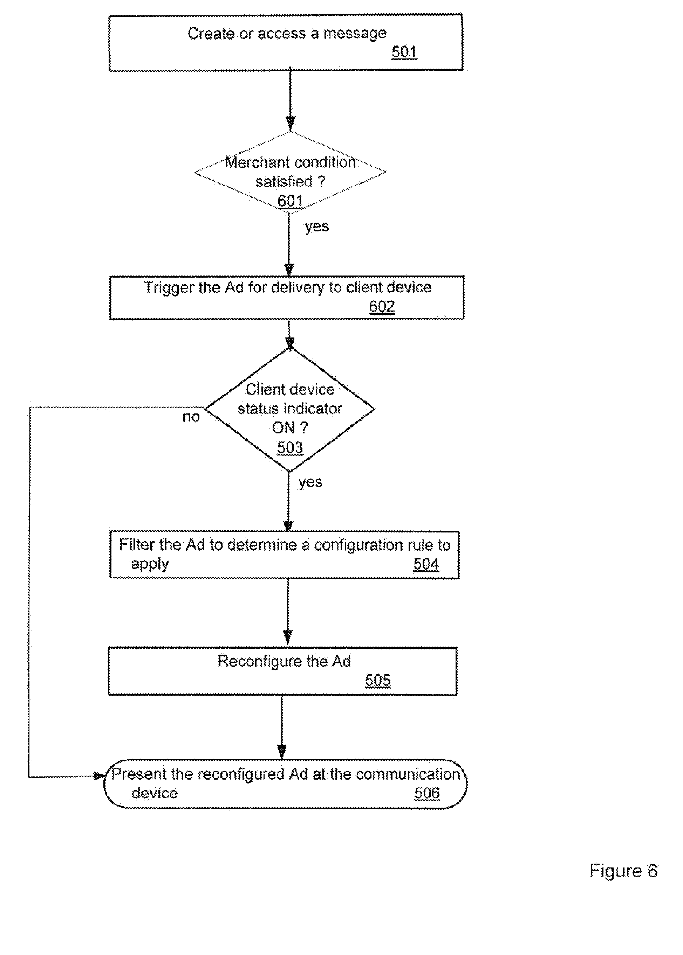

Figure 6 depicts another variation of the process flow among components of the system of Figure 1 for delivering and displaying messages to communication device 101, that takes into account conditions associated with the advertiser that broadcasts the ad.

It is contemplated that communication device 101 may include an address book application or a calendar application, the contents being data-accessible by ad delivery manager 190 via processor 238 and memory 224, 226. Figure 6 depicts an embodiment where the advertiser comprises a merchant or entity listed in the address book application or the calendar application. Furthermore it is contemplated that in a locality-based ad, for instance, the ad or promotional offer contained therein may only be desirable and available to a user of communication device 101 under certain conditions associated with the merchant. For instance, if the user is a downtown locality, the offer could be for "drinks at half-price anytime after 5pm today!" from a bar or restaurant in the locality of the user. Such an offer would obviously be of interest to the user only if the bar or restaurant is open for business at a time convenient for the user. Thus, at the time the ad is broadcast on behalf of the merchant or advertiser, the condition that the advertising entity must be open for business at the time of broadcasting the ad must be satisfied. Thus, while listed in the user's address book application or calendar application, a merchant or advertiser may display promotional offers, but through parsing of meta data, these promotions would show only during the times when the merchant or service is actually available.

Referring again to the exemplary variation depicted at Figure 6, at step 601, it is determined if the predetermined conditions associated with advertiser, such as opening hours of the merchant or entity, are satisfied. If so, only then, at step 602, is the ad broadcast triggered, for ad delivery to communication device 101. The remaining steps for presentation of the ad are as depicted in the corresponding steps of Figure 5.

Although various embodiments have been described in the disclosure herein, it will be understood by those skilled in the art that further variations may be made without departing from the scope of the appended claims.

## Claims

1. A computer implemented method in a processor (238) of a communication device (101) for delivery and display of an advertisement message, the method comprising:
receiving (502), at the communication device (101), an advertisement message;
determining (503) whether a status indicator mode is active;
upon determining that the status indicator mode is active, determining (504) a reconfiguration rule for applying to the advertisement message;
reconfiguring (505) the advertisement message according to the determined reconfiguration rule; and
presenting (506) the reconfigured advertisement message at the communication device (101).

2. The method of claim 1 wherein the determined reconfiguration rule comprises reconfiguration (505) to a silent mode screen display including graphical effects.

3. The method of claim 1 wherein the determined reconfiguration rule comprises reconfiguration (505) to an audible advertisement message.

4. The method of any of claims 1 to 3, wherein reconfiguring (505) the advertisement message comprises
accessing a calendar application of the communication device (101);
identifying a next available time slot of the calendar application;
and
delaying presentation of the advertisement message at the communication device (101) until a time during the next available time slot.

5. The method of any one of claims 1 to 4, wherein the advertisement message is received from a merchant source, the merchant source being listed in an application of the communication device (101).

6. The method of claim 5, wherein the advertisement message is presented at the communication device (101) only if a predefined condition associated with the merchant source (601) is satisfied, the predefined condition associated with the merchant source comprising opening hours of a business entity of the merchant source.

7. A computer program product storing instructions and data to configure a processor to perform the method of any of claims 1 to 6.

8. A wireless handheld communication device (101) for displaying an advertisement message, the communication device (101) comprising:
a processor (238) and a memory coupled thereto (224, 226), the memory storing instructions and data configuring the processor to perform the method according to any of claims 1 to 6.

9. A communication device (101) for displaying an advertisement message based on an indicated status mode at the communication device (101), the communication device (101) comprising:
a processor (238);
a memory (224, 226) coupled to the processor, the memory comprising instructions which, when executed in the processor, provide:
a status indicator monitor module (290) to indicate an active mode;
an advertisement filter module (291) to determine a reconfiguration rule to apply to the advertisement message when the active mode is indicated; and
an advertisement reconfiguration module (292) to reconfigure the advertisement, according to the determined reconfiguration rule, for presentation at a display of the communication device (101), the display being coupled to the processor and to the memory.

10. The communication device (101) of claim 9 wherein the advertisement reconfiguration module (292) reconfigures the advertisement message for presentation in a silent mode screen display (222) including graphical effects.

11. The communication device (101) of claim 9 wherein the reconfiguration module (292) reconfigures the advertisement message for presentation as an audible advertisement message.

12. The communication device (101) of any one of claims 9 to 11 further comprising a calendar application, the calendar application including a next available time slot wherein the presentation of the advertisement message at the communication device (101) is delayed until a time during the next available time slot.

13. The communication device (101) of claim 12 further comprising an address book application having an address book list, the address book list including a merchant source for the advertisement message, and wherein the advertisement message is presented at the communication device (101) only if a predefined condition (601) associated with the merchant source is satisfied.

14. A method implemented in a processor of a server computer (108) for delivery and display of an advertisement message at a communication device (101), the server computer communicatively coupled to the communication device (101) over a communication network (106), the method comprising:
determining (503) whether a status indicator mode of the communication device (101) is active, when the advertisement message is received at the communication device (101);
upon determining that the status indicator mode is active, receiving the advertising message at the server computer (108),
determining a reconfiguration rule (504) for applying to the advertisement message;
reconfiguring (505) the advertisement message according to the determined reconfiguration rule; and
forwarding the reconfigured advertisement message for presentation (506) at the communication device (101).

15. The method of claim 14 wherein the step of forwarding the advertisement message to the communication device (101) further comprises:
accessing a calendar application of the communication device (101);
identifying a next available time slot of the calendar application;
and
delaying presentation of the advertisement message at the communication device (101) until a time during the next available time slot.

## Amended claims

### Amended claims in accordance with Rule 137(2) EPC.

**1.** A computer implemented method in a processor (238) of a communication device (101) for delivery and display of an advertisement message, the method comprising:
receiving (502), at the communication device (101), an advertisement message;
determining (503) whether a status indicator mode is active;
upon determining that the status indicator mode is active, determining (504) a reconfiguration rule for applying to the advertisement message;
reconfiguring (505) the advertisement message according to the determined reconfiguration rule; and
presenting (506) the reconfigured advertisement message at the communication device (101).

**2.** The method of claim 1 wherein the determined reconfiguration rule comprises reconfiguration (505) to a silent mode screen display including graphical effects.

**3.** The method of claim 1 wherein the determined reconfiguration rule comprises reconfiguration (505) to an audible advertisement message.

**4.** The method of any of claims 1 to 3, wherein reconfiguring (505) the advertisement message comprises
accessing a calendar application of the communication device (101);
identifying a next available time slot of the calendar application; and
delaying presentation of the advertisement message at the communication device (101) until a time during the next available time slot.

**5.** The method of any one of claims 1 to 4, wherein the advertisement message is received from a merchant source, the merchant source being listed in an application of the communication device (101).

**6.** The method of claim 5, wherein the advertisement message is presented at the communication device (101) only if a predefined condition associated with the merchant source (601) is satisfied, the predefined condition associated with the merchant source comprising opening hours of a business entity of the merchant source.

**7.** A computer program product storing instructions and data to configure a processor to perform the method of any of claims 1 to 6.

**8.** The method of any of claims 1 to 6, wherein the communication device comprises a wireless handheld communication device (101).

**9.** A communication device (101) for displaying an advertisement message based on an indicated status mode at the communication device (101), the communication device (101) comprising:
a processor (238);
a memory (224, 226) coupled to the processor, the memory comprising instructions which, when executed in the processor, provide:
a status indicator monitor module (290) to indicate an active mode;
an advertisement filter module (291) to determine a reconfiguration rule to apply to the advertisement message when the active mode is indicated; and
an advertisement reconfiguration module (292) to reconfigure the advertisement, according to the determined reconfiguration rule, for presentation at a display of the communication device (101), the display being coupled to the processor and to the memory.

**10.** The communication device (101) of claim 9 wherein the advertisement reconfiguration module (292) reconfigures the advertisement message for presentation in a silent mode screen display (222) including graphical effects.

**11.** The communication device (101) of claim 9 wherein the reconfiguration module (292) reconfigures the advertisement message for presentation as an audible advertisement message.

**12.** The communication device (101) of any one of claims 9 to 11 further comprising a calendar application, the calendar application including a next available time slot wherein the presentation of the advertisement message at the communication device (101) is delayed until a time during the next available time slot.

**13.** The communication device (101) of claim 12 further comprising an address book application having an address book list, the address book list including a merchant source for the advertisement message, and wherein the advertisement message is presented at the communication device (101) only if a predefined condition (601) associated with the merchant source is satisfied.

**14.** A method implemented in a processor of a server computer (108) for delivery and display of an advertisement message at a communication device (101), the server computer communicatively coupled to the communication device (101) over a communication network (106), the method comprising:
determining (503) whether a status indicator mode of the communication device (101) is active, when the advertisement message is received at the communication device (101);
upon determining that the status indicator mode is active, receiving the advertising message at the server computer (108),
determining a reconfiguration rule (504) for applying to the advertisement message;
reconfiguring (505) the advertisement message according to the determined reconfiguration rule; and
forwarding the reconfigured advertisement message for presentation (506) at the communication device (101).

**15.** The method of claim 14 wherein the step of forwarding the advertisement message to the communication device (101) further comprises:
accessing a calendar application of the communication device (101);
identifying a next available time slot of the calendar application; and
delaying presentation of the advertisement message at the communication device (101) until a time during the next available time slot.
